(19) Europäisches Patentamt / European Patent Office / Office européen des brevets

(11) **EP 2 237 067 B1**

(12) **FASCICULE DE BREVET EUROPEEN**

(45) Date de publication et mention
de la délivrance du brevet:
**24.12.2014 Bulletin 2014/52**

(51) Int Cl.:
*G01S 13/82* $^{(2006.01)}$     *G01S 13/87* $^{(2006.01)}$
*G01S 13/91* $^{(2006.01)}$     *G08G 5/02* $^{(2006.01)}$

(21) Numéro de dépôt: **10159171.7**

(22) Date de dépôt: **06.04.2010**

(54) **Système et procédé d'aide à l'appontage d'un aeronef**

Landungshilfssystem und -verfahren für ein Luftfahrzeug

System and method for assisting the deck landing of an aircraft

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **03.04.2009 FR 0901645**

(43) Date de publication de la demande:
**06.10.2010 Bulletin 2010/40**

(73) Titulaire: **Thales**
**92200 Neuilly Sur Seine (FR)**

(72) Inventeurs:
• **Garrec, Patrick**
**33700 Mérignac (FR)**
• **Cornic, Pascal**
**29200 Brest (FR)**
• **Barraux, Eric**
**29200 Brest (FR)**

(74) Mandataire: **Lucas, Laurent Jacques et al
Marks & Clerk France
Conseils en Propriété Industrielle
Immeuble Visium
22, Avenue Aristide Briand
94117 Arcueil Cedex (FR)**

(56) Documents cités:
**WO-A1-2006/053868    WO-A1-2007/063126
WO-A1-2007/131923    WO-A1-2008/113750
FR-A1- 2 727 082    FR-A1- 2 836 554
GB-A- 2 320 829**

• **XILIN YANG ET AL: "Prediction of vertical
motions for landing operations of UAVs",
DECISION AND CONTROL, 2008. CDC 2008. 47TH
IEEE CONFERENCE ON, IEEE, PISCATAWAY, NJ,
USA, 9 December 2008 (2008-12-09), pages
5048-5053, XP031401490, ISBN:
978-1-4244-3123-6**

EP 2 237 067 B1

**Description**

La présente invention concerne un système et un procédé d'aide à l'appontage d'un aéronef sur une plate-forme, plus particulièrement sur une plate-forme mobile. Elle s'applique notamment à l'appontage d'aéronefs autonomes sur des navires.

Pour l'atterrissage des aéronefs, plusieurs systèmes bien connus de guidage automatique ont été mis en oeuvre. Le guidage automatique d'un aéronef passe par une détermination précise de la position courante de l'aéronef afin de corriger éventuellement automatiquement sa trajectoire pour l'aligner correctement avec une piste d'atterrissage par exemple. Cette détermination de la position courante de l'aéronef peut être effectuée à l'aide de différents systèmes.

Parmi ces systèmes, les plus connus sont les systèmes ILS, sigle anglo-saxon pour « Instrument Landing System ». Les systèmes ILS sont des systèmes d'approche aux instruments pour les aéronefs qui en sont équipés. Le système ILS permet d'indiquer au pilote les manoeuvres à effectuer pour réussir son atterrissage. Ces systèmes nécessitent donc une instrumentation spécifique à bord de l'aéronef ainsi que des systèmes de détection et de guidage au sol.

Un autre système de guidage employé sur les aéroports est le MLS, signifiant « Microwave Landing System » en langage anglo-saxon. Le MLS est un système d'atterrissage hyperfréquence. Il permet d'effectuer un guidage de précision pour un atterrissage, quelles que soient les conditions météorologiques.

Les systèmes ILS et MLS sont des équipements très lourds aussi bien au sol qu'à bord de l'aéronef. Aussi, il est inenvisageable d'installer de tels équipements sur une plate-forme de taille réduite telle qu'un navire. De plus, les aéronefs légers ne peuvent embarquer l'équipement nécessaire à la mise en oeuvre de ces systèmes autant pour des raisons de coût que de manque de place.

Hormis ces moyens classiques principalement utilisés par l'aviation civile commerciale, d'autres solutions peuvent être envisagées.

Une première solution utilise un système de positionnement par satellites, ce type de système étant communément désigné par le sigle GNSS pour « Global Navigation Satellite System ». Parmi ces systèmes de positionnement, le système GPS pour « Global Positioning System » est aujourd'hui le plus largement utilisé. Les systèmes GNSS ont pour principal inconvénient leur manque de robustesse. En effet, ce type de service n'est pas toujours disponible et est sensible aux perturbations électromagnétiques.

Une deuxième solution est l'utilisation d'un système LIDAR, acronyme anglo-saxon pour « Light Détection And Ranging ». Ce système de localisation, fonctionnant sur le même principe que les radars, utilise des lasers dans le domaine du visible, voire dans le domaine de l'infrarouge. Ceci le rend donc inopérant lorsque les conditions météorologiques sont défavorables.

Une autre solution consiste à utiliser un radar à ondes millimétriques très directif. Le radar à ondes millimétriques nécessite également une phase de recherche pour la désignation de la cible. Il doit également être positionné de manière précise par rapport à la piste d'atterrissage. Cette solution est également très coûteuse et nécessite souvent un répondeur embarqué à bord de l'aéronef. Le répondeur est lui-même coûteux, volumineux, lourd, et consomme beaucoup d'énergie. Il faut de plus le redonder pour des raisons de sécurité de fonctionnement.

D'autres méthodes de localisation facilitant le guidage automatique des aéronefs ont été proposées par le passé. On peut notamment citer les demandes de brevets internationales référencées sous les numéros respectifs WO2006/053868, WO2007/063126, lesquelles utilisent notamment un radar et une balise multifonctions à bord de l'aéronef.

Mais ces dernières méthodes sont difficilement applicables à l'identique dans le cas d'un appontage sur une plate-forme mobile telle qu'un navire ou une plate-forme pétrolière, spécialement lorsque les conditions environnementales sont défavorables. Par exemple, en cas de mer agitée, l'aéronef peut être amené à se poser sur une surface soumise à de forts mouvements de roulis, de tangage, de pilonnement, de cavalement et/ou d'embardées, rendant l'appontage délicat voire dangereux. De plus, la structure de la plate-forme peut provoquer l'apparition de vents turbulents autour de l'aéronef.

En outre, les solutions employant un radar classique nécessitent une émission d'un signal à partir de la plate-forme de puissance suffisamment élevée pour recevoir l'écho de peau de l'aéronef. Ces solutions sont incompatibles avec les contraintes de compatibilité électromagnétiques et d'éventuelles exigences de discrétion électromagnétique.

Des techniques de guidage utilisant des senseurs optiques tels que des caméras infrarouge ou optiques, thermique ou laser peuvent également être mises en oeuvre. Toutefois, ces techniques ne sont pas compatibles lorsqu'il est souhaité de pouvoir effectuer un appontage quelles que soient les conditions de visibilité, et notamment par temps de brouillard.

Par ailleurs, bien que les demandes de brevet internationales référencées sous les numéros WO2007/131923 et WO2008/113750 traitent le problème des trajets multiples d'ondes issus de réflexions sur la surface d'appontage, qui par exemple est un pont métallique de navire. Cependant, la présence de parois latérales réfléchissant les ondes électromagnétiques à proximité de l'aire d'appontage peut entraîner l'apparition d'autres trajets multiples d'ondes qui peuvent également perturber les mesures. Or, sur des navires par exemple, la présence de telles parois est possible.

Il est également connu dans l'art antérieur, notamment par la demande de brevet FR 2 836 554, un dispositif de localisation pour système d'aéronef sans pilote.

Un but de l'invention est notamment de pallier des inconvénients précités en proposant un système d'aide à l'appontage précis et discret d'un aéronef sur une plate-forme mobile.

A cet effet, l'invention a pour objet un système d'aide à l'appontage d'un aéronef sur une plate-forme mobile comportant une surface d'appontage, ledit aéronef comprenant un émetteur de signaux, ladite surface d'appontage de la plate-forme réfléchissant les ondes électromagnétiques le système comprenant des moyens de détermination des commandes de vol à exécuter par l'aéronef, lesdits moyens étant au moins alimentés par des moyens de localisation de l'aéronef et par des moyens de prédiction des mouvements de la plate-forme, les moyens de localisation comprenant au moins deux senseurs passifs espacés, fixés à proximité de la surface d'appontage et aptes à recevoir les signaux émis par l'aéronef, chaque senseur étant un panneau sur lequel plusieurs récepteurs antennaires sont répartis dans les deux dimensions dudit panneau, chaque panneau étant fixé dans un plan sensiblement orthogonal à la surface d'appontage et chaque panneau étant incliné autour d'un axe sensiblement orthogonal à la surface d'appontage, les faisceaux d'éclairement desdits panneaux se croisant en azimut au-dessus de la surface d'appontage.

Le système selon l'invention permet d'effectuer un guidage précis et discret des aéronefs. La plate-forme mobile peut, par exemple, être une barge, un navire, une plate-forme pétrolière. Par senseur passif, on entend un senseur n'émettant pas de signaux ou émettant des signaux de faible puissance - par exemple, une puissance suffisante pour transmettre des données à l'aéronef lors de sa phase d'approche, mais très inférieure aux puissances utilisées par les radars pour faire de la détection active -. Les senseurs sont espacés par une distance permettant de localiser l'aéronef par triangulation.

Ce mode de réalisation permet notamment de guider l'aéronef par tout temps. Le signal émis par l'aéronef est, par exemple, un signal radiofréquences à bande étroite de manière à obtenir un signal d'interférence sous la forme d'une sinusoïde au niveau du panneau d'antennes. La répartition de plusieurs antennes sur un panneau permet d'effectuer un échantillonnage spatial sur l'amplitude du signal d'interférence reçu selon un axe sensiblement vertical, ce qui permet de déterminer la position de l'aéronef malgré la présence de trajets multiples d'ondes dus aux réflexions sur la surface d'appontage.

Croiser les faisceaux d'éclairement permet d'obtenir une couverture d'éclairement supérieure tout en maintenant le point d'appontage - l'endroit où l'on souhaite que l'aéronef se pose sur la surface d'appontage - aux forts dépointages. Par exemple, les panneaux formant les senseurs peuvent être tournés de manière à ce que leurs lobes principaux se recouvrent à l'optimal sur le point d'appontage.

Les récepteurs antennaires du panneau peuvent être des antennes planes rassemblées par blocs, les blocs étant orientés, dans le plan du panneau, de manière identique pour tous les senseurs, les blocs étant répartis dans la longueur du panneau.

Selon un mode de réalisation du système selon l'invention, la plate-forme mobile comprend une ou plusieurs parois latérales réfléchissant les ondes électromagnétiques et chaque panneau de la plate-forme est incliné autour d'un axe sensiblement orthogonal au plan dudit panneau, selon un angle α formé avec la verticale compris entre 20° et 70°.

L'angle d'inclinaison est, de préférence, choisi de sorte qu'au moins une période du signal d'interférence puisse être représentée selon un axe sensiblement vertical et qu'avantageusement, au moins un quart de période du signal d'interférence puisse être représentée sur un axe sensiblement horizontal. Cette configuration permet, avec un minimum d'antennes, de traiter les problèmes dus aux trajets multiples des ondes issues de réflexions à la fois sur la surface d'appontage mais également sur les parois latérales.

Selon un mode de réalisation du système selon l'invention, un oscillateur-local est relié aux senseurs pour réaliser un radio-interféromètre applicable aux signaux émis par l'aéronef. La réalisation de cet interféromètre permet notamment d'augmenter la précision de la mesure de position de l'aéronef. On peut également, pour redonder la mesure de position en azimut lors de la phase finale d'appontage, utiliser une caméra infrarouge pour détecter l'aéronef.

Selon un autre mode de réalisation, chaque senseur est une caméra optique. De préférence, chacune des caméras est mobile, de manière à couvrir un angle en azimut suffisamment large.

Le système selon l'invention peut comprendre une balise de référence solidaire de la plate-forme et orientée pour émettre des signaux en direction des senseurs. Cette balise de référence permet notamment de calibrer les senseurs, et d'éviter les dérives thermiques. Elle permet également de constituer une direction de référence relative à la plate-forme. Dans le cas ou les senseurs sont des récepteurs à caméra optique, la balise de référence peut être une simple source de lumière.

Selon un mode de réalisation du système selon l'invention, l'aéronef est sans pilote, l'aéronef étant apte à être guidé automatiquement à distance, par exemple depuis la plate-forme. Le système selon l'invention s'applique plus particulièrement à des aéronefs à voilure tournante comme, par exemple, les hélicoptères, ce dernier type d'appareil nécessitant une grande précision dans l'approche finale et l'appontage.

L'invention a également pour objet un procédé d'aide à l'appontage d'un aéronef sur une plate-forme mobile comportant une surface d'appontage, ladite surface d'appontage réfléchissant les ondes électromagnétiques, chaque senseur étant un panneau sur lequel plusieurs récepteurs antennaires sont répartis dans les deux dimensions dudit panneau et chaque panneau est incliné autour d'un axe sensiblement orthogonal au plan dudit panneau, le procédé comprenant au moins les étapes suivantes :

émettre, à partir de l'aéronef, des signaux ;

recevoir, sur au moins deux senseurs passifs solidaires de la plate-forme, les signaux émis par l'aéronef et déterminer la position de l'aéronef à partir de ces signaux reçus ;

exprimer les coordonnées de la position de l'aéronef dans un référentiel correspondant à une plate-forme immobile,

prédire les mouvements de la plate-forme ;

formuler des commandes de vol pour orienter l'aéronef sur sa trajectoire d'appontage en utilisant les coordonnées de l'aéronef exprimées précédemment et les prédictions de mouvements de la plate-forme

éliminer des trajets multiples en élévation et en azimut en effectuant un échantillonnage spatial de l'amplitude du signal d'interférence reçu par au moins un senseur dans l'axe élévation et en effectuant un échantillonnage spatial de l'amplitude du signal d'interférence reçu par au moins un senseur dans l'axe azimut.

Selon un mode de mise en oeuvre du procédé selon l'invention, chaque panneau est incliné autour d'un axe sensiblement orthogonal au plan dudit panneau, selon un angle $\alpha$ formé avec la verticale compris entre 20° et 70°.

Selon un mode de mise en oeuvre du procédé selon l'invention, la plate-forme transmet des données par voie radioélectrique à l'aéronef grâce à un émetteur, le niveau de puissance d'émission par ledit émetteur étant ajusté en fonction de la distance mesurée entre ladite plate-forme et l'aéronef, la puissance d'émission étant diminuée lorsque l'aéronef se rapproche de la plate-forme. Cette méthode permet d'améliorer la discrétion électromagnétique de la plate-forme ; elle permet également d'assurer un retour de l'aéronef vers la plate-forme en cas de perte de la liaison principale entre et/ou du système de navigation satellitaire. La puissance de la balise embarquée peut être dimensionnée pour permettre une détection de l'aéronef pour faire un guidage vers le bâtiment. La balise est commandée en puissance pour être le plus discret possible et pour éviter la saturation en zone proche.

Selon un mode de mise en oeuvre du procédé selon l'invention, pour chaque senseur, on détermine la position de l'aéronef à partir des signaux reçus sur ledit senseur, puis l'on détermine la position de l'aéronef par triangulation à partir des mesures issues d'au moins deux senseurs, et que l'on combine ces positions déterminées indépendamment pour fiabiliser la localisation dudit aéronef.

Selon un mode de mise en oeuvre du procédé selon l'invention, le signal émis depuis l'aéronef et reçu par les senseurs de la plate-forme est un signal mono fréquence émis en bande X ou un signal comportant un peigne de raies en fréquences. L'utilisation d'un signal comportant un peigne de raies permet d'obtenir une agilité en fréquences et permet aussi de s'affranchir des trajets multiples.

Par ailleurs, l'étape de formulation des commandes de vol pour orienter l'aéronef sur sa trajectoire d'appontage peut également prendre en compte des données de navigation issues directement des instruments de l'aéronef. Ces données de navigation étant par exemple issues d'un terminal GPS, d'une centrale inertielle, d'accéléromètres, d'un compas magnétique.

D'autres caractéristiques apparaîtront à la lecture de la description détaillée donnée à titre d'exemple et non limitative qui suit faite en regard de dessins annexés qui représentent :

la figure 1a, un exemple de stratégie d'appontage d'un aéronef autonome à voilure tournante sur une plate-forme ;

la figure 1b, une courbe générique représentant la variation en fonction du temps de la position en hauteur de la plate-forme, mouvement appelé pilonnement ;

la figure 2, une illustration d'une méthode de mesure de la distance entre les senseurs et l'aéronef mise en oeuvre par le système selon l'invention ;

la figure 3, une courbe représentant un exemple de l'erreur effectuée sur la mesure de distance en fonction de la distance de l'aéronef pour un écartement des senseurs de 10 mètres et une erreur angulaire de 2 mrad ;

les figures 4a et 4b, des exemples de technique de mesure de la distance entre les senseurs et l'aéronef ;

la figure 5a, un exemple de mise en oeuvre du système selon l'invention sur un spot ou une piste d'appontage ;

la figure 5b, une représentation de la couverture du faisceau émis par la balise de référence solidaire de la plate-forme ;

la figure 6, un exemple d'architecture du système selon l'invention ;

la figure 7a, un premier exemple de configuration des senseurs permettant de traiter le problème des réflexions de signaux sur des parois latérales à la surface d'appontage ;

la figure 7b, un deuxième exemple de configuration des senseurs permettant de traiter le problème des réflexions de signaux sur des parois latérales à la surface d'appontage ;

la figure 8a, un exemple de positionnement des senseurs favorisant une large couverture de l'espace,

la figure 8b, un exemple de positionnement des senseurs permettant de maximiser la distance mesurable à l'aéronef.

Dans un souci de clarté, les mêmes références dans des figures différentes désignent les mêmes éléments.

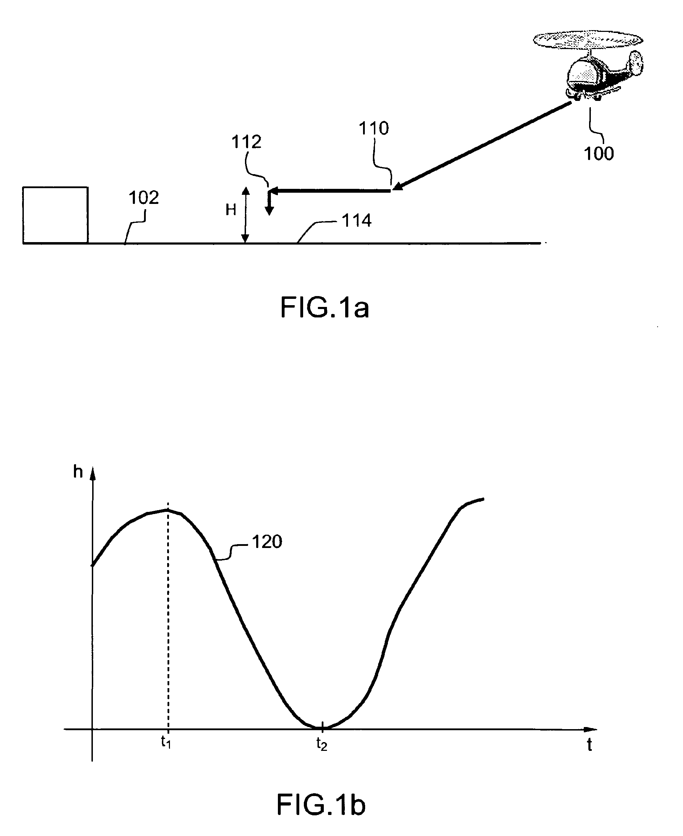

La figure 1a illustre un exemple de stratégie d'appontage d'un aéronef autonome 100 à voilure tournante sur une plate-forme. Dans un souci de simplification, la plate-forme 102 est, dans l'exemple, seulement soumise à des mouvements de pilonnement, autrement dit des mouvements de translation selon un axe vertical. L'amplitude de ces mouvements est représentée en figure 1 b. L'aéronef 100 à voilure tournante, qui par exemple est un hélicoptère sans pilote, est guidé automatiquement à partir de la plate-forme grâce au système selon l'invention, détaillé dans les figures suivantes.

Dans un premier temps, l'aéronef à voilure tournante 100 est guidé en pente descendante, selon un angle $\alpha$ par exemple égal à 4° avec l'horizontale, jusqu'à un point 110 situé à une hauteur H au-dessus de la hauteur maximale atteinte par plate-forme 102. Dans un deuxième temps, l'aéronef à voilure tournante 100 est guidé horizontalement vers un point 112 situé en surplomb du point d'appontage 114 prévu. Puis, dans un troisième temps, l'aéronef à voilure tournante 100 est commandé pour rallier le point d'appontage 114 selon un mouvement vertical descendant. L'aéronef 100 doit donc être commandé au moment opportun pour éviter de heurter violemment la plate-forme 102.

La figure 1b montre une courbe générique représentant la variation en fonction du temps de la position en hauteur de la plate-forme 102. La courbe traduit une variation sensiblement sinusoïdale de la hauteur h de la plate-forme 102 en fonction du temps t. Le moment t1 où l'aéronef à voilure tournante 100 de la figure 1 a est commandé pour descendre jusqu'au point d'appontage 114 intervient de préférence lorsque la hauteur h de la plate-forme 102 est à son maximum. L'aéronef 100 doit alors se déplacer suffisamment rapidement pour rallier le point d'appontage 114 à un instant t2, de préférence lorsque la plate-forme 102 est à son point le plus bas, sa vitesse de pilonnement étant sensiblement nulle à cet instant t2. Lorsque l'aéronef 100 se pose pendant la phase descendante du pilonnement de la plate-forme 102, le choc est amorti ; lorsque l'aéronef à voilure tournante 100 se pose à l'instant t2, on est ramené au cas d'un atterrissage. De préférence, la fréquence de rafraîchissement des informations transmises à l'aéronef 100 est de l'ordre d'au moins dix fois la fréquence des mouvements subis par la plate-forme mobile 102, afin d'anticiper correctement le moment d'appontage opportun et de pouvoir réajuster fréquemment la trajectoire de l'aéronef 100 jusqu'à l'appontage.

Le système selon l'invention permet notamment de déterminer, à partir de la plate-forme 102, la position de l'aéronef - en l'espèce, la position de l'hélicoptère 100 - et de transmettre à cet aéronef des commandes de guidage pour lui permettre de se poser en sécurité. Pour calculer la position de l'aéronef 100, le système selon l'invention détermine la distance entre la plate-forme 102 et l'aéronef 100.

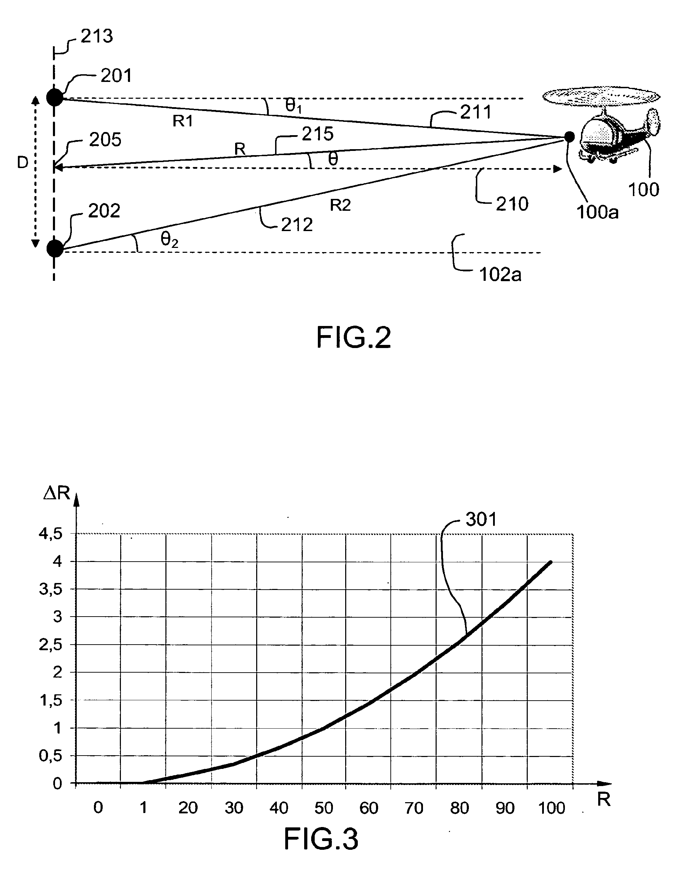

La figure 2 illustre une méthode de mesure de la distance séparant les senseurs et l'aéronef mise en oeuvre par le système selon l'invention. La surface d'appontage 102a de la plate-forme 102 est représentée vue de dessus. Plusieurs senseurs passifs 201, 202 (dans l'exemple, deux senseurs 201, 202) sont installés sur un côté de la surface d'appontage 102a. Chacun de ces senseurs 201, 202 peut effectuer indépendamment une localisation de l'aéronef 100 selon une méthode déjà présentée dans les demandes internationales WO2007/063126 et WO2007/131923. Ces localisations indépendantes peuvent être combinées dans le cadre du système selon l'invention afin de renforcer la fiabilité des mesures de localisation. Par ailleurs, la position de l'aéronef peut être déterminée par triangulation, comme décrit ci-dessous.

Selon un mode de réalisation préféré présenté dans les figures qui suivent, les senseurs comprennent des récepteurs antennaires aptes à détecter des signaux électromagnétiques radiofréquences. Selon un autre mode de réalisation, les senseurs sont aptes à détecter des signaux optiques ; ce sont par exemple des caméras optiques.

Avantageusement, l'axe 213 reliant les deux senseurs 201, 202 est orthogonal à l'axe d'approche de l'aéronef 100 dans le plan horizontal. Dans l'exemple, cet axe 213 est orthogonal à l'axe 210 de la piste 102 formant la surface d'appontage 102a. L'axe 213 formé par les deux senseurs 201, 202 et l'axe 210 de la piste 102 s'intersectent en un point origine 205. Les deux senseurs 201, 202 sont séparés par une distance D. L'ouverture en azimut et en élévation de ces senseurs 201, 202 est choisie pour tenir compte des dispersions de vol que l'aéronef pourrait avoir. Cela permet aussi de détecter l'aéronef dans une large fenêtre depuis la plate-forme 102. En élévation, cela permet de palier les variations de hauteurs liées au pilonnement et aux rafales de vent. Les senseurs 201, 202 peuvent être cohérents, c'est à dire utiliser un même oscillateur local pour le traitement des signaux reçus.

L'aéronef 100 est pourvu d'un émetteur 100a diffusant des signaux en direction des senseurs 201, 202. Avantageusement, les signaux émis par l'émetteur 100a sont un simple signal mono-fréquence continu, souvent désigné par l'acronyme anglo-saxon CW pour « Continuous Wave ». Ce signal CW peut, par exemple, être émis en bande X afin, notamment, d'être très peu sensible aux conditions climatiques.

Le système selon l'invention permet de déterminer la distance R séparant le point origine 205 de l'aéronef 100 et de déterminer l'angle $\theta$ formé dans le plan horizontal entre l'axe 215 reliant le point origine 205 à l'aéronef 100 et l'axe de la piste 210. L'angle formé entre l'orthogonale à l'axe 213 des senseurs 201, 202 passant par le premier senseur 202 et l'axe 211 reliant le premier senseur 201 à l'aéronef 100 est noté $\theta_1$. L'angle formé entre l'orthogonale à l'axe 213 des senseurs 201, 202 passant par le deuxième senseur 202 et l'axe 212 reliant le deuxième senseur 202 à l'aéronef 100 est noté $\theta_2$. Le

premier senseur 201 est apte à mesurer l'angle $\theta_1$, et le deuxième senseur 201 est apte à mesurer l'angle $\theta_2$.

D'une part, l'angle $\theta$ est déterminé par la relation suivante $\theta = (\theta_2 - \theta_1)/2$. D'autre part, la distance R est déterminée comme suit :

$$R = \frac{D}{|\tan\theta_1| + |\tan\theta_2|}.$$

Lorsque l'aéronef 100 évolue à basse altitude, étant donné les petites valeurs des angles $\theta_1$ et $\theta_2$, on peut estimer R par l'approximation suivante :

$$R \approx \frac{D}{|\theta_1| + |\theta_2|}.$$

Par ailleurs, l'erreur de mesure angulaire $\Delta\theta$ est égale à la moitié de la somme des erreurs de mesure angulaire $\Delta\theta_1$, $\Delta\theta_2$ sur chacun des angles $\theta_1$ et $\theta_2$. Autrement dit, $\Delta\theta = (|\Delta\theta_1| + |\Delta\theta_2|) / 2$. De plus, l'erreur de mesure en distance $\Delta R$ est exprimée comme suit : $\Delta R = (2R^2/D) . \Delta\theta$ ; la figure 3 représente, via une courbe 301, un exemple de cette erreur $\Delta R$ effectuée sur la mesure de distance en fonction de la distance R de l'aéronef pour D=10 mètres et $\Delta\theta$=2 mrad. La précision obtenue sur la mesure de distance R augmente donc à mesure que l'aéronef 100 se rapproche du point d'appontage.

La détection de l'aéronef 100 lorsque celui-ci est encore éloigné du point d'appontage 114, par exemple de plusieurs dizaines de km, permet de pré-positionner l'aéronef 100 sur la trajectoire d'appontage à longue distance. Or, l'erreur de mesure $\Delta R$ étant quadratique en fonction de la distance R mesurée, des méthodes alternatives pour déterminer la distance de l'aéronef 100 peuvent être appliquées lorsque la distance R est grande au point que l'erreur de mesure $\Delta R$ obtenue par la méthode susmentionnée devient inacceptable.

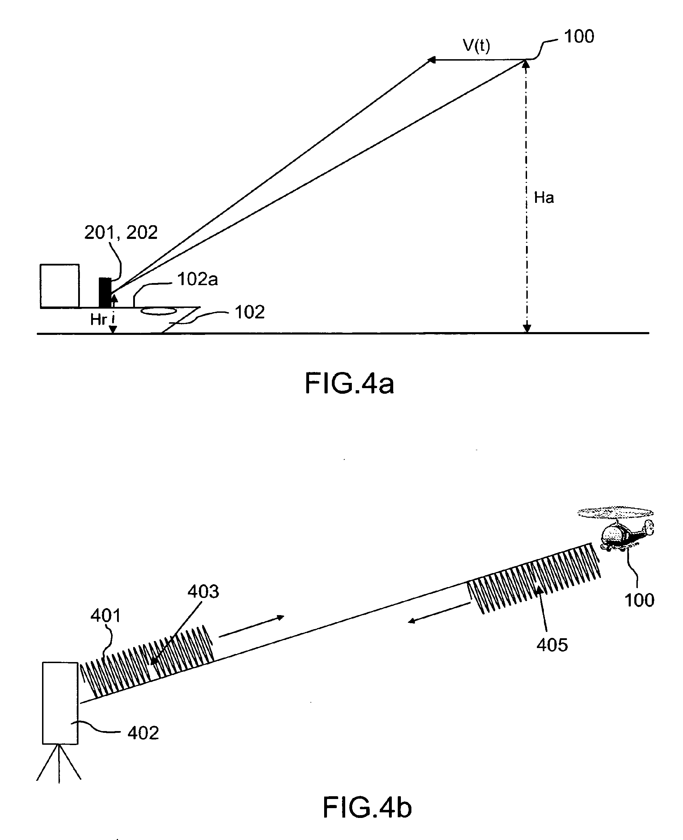

Par exemple, il est possible de procéder à une mesure de distance par approche coopérative. Cette technique, illustrée en figure 4a nécessite de connaître l'élévation de l'aéronef 100 ou sa vitesse de rapprochement avant que ce dernier ne commence à amorcer sa pente de descente. Ces paramètres peuvent, par exemple, être déterminés directement grâce aux instruments embarqués dans l'aéronef 100 puis transmis aux senseurs 201, 202 par l'émetteur 100a embarqué dans l'aéronef 100. Connaissant l'altitude Hr à laquelle se situent les senseurs 201, 202, l'altitude Ha de l'aéronef 100 ou sa vitesse V(t) de rapprochement vers lesdits senseurs 201, 202, on peut, par un simple calcul connu de l'homme de l'art, déduire la distance R séparant l'aéronef 100 des senseurs 201,202.

La distance entre les senseurs 201, 202 et l'aéronef 100 peut être également obtenue grâce à un transpondeur embarqué dans l'aéronef 100, lequel transpondeur, en émettant un message de réponse dès la réception d'un message d'interrogation issu de la plate-forme 102 est utilisé comme radar secondaire.

Selon une méthode alternative de mesure de distance illustrée en figure 4b, une synchronisation par saut de phase peut aussi être employée. Un signal 401 de fréquence pseudo continue, servant aussi à transmettre des informations, par exemple des informations de position, peut être produit par un émetteur 402 installé sur la plate-forme 102. Ce signal, de faible puissance et comprenant un saut de phase 403, est reçu par une balise 100a embarquée sur l'aéronef 100. Lors de la réception d'un saut de phase par l'aéronef 100, après un temps de latence convenu, la réponse de l'aéronef 100 se fait par exemple par l'émission d'un saut de phase 405. L'avantage d'un tel principe réside dans la robustesse du saut de phase en comparaison des temps de montée, tributaires des échos multiples.

Selon un mode de réalisation du système selon l'invention, l'émetteur 100a embarqué dans l'aéronef 100 est une balise multifonctions comportant notamment des voies de réceptions permettant de communiquer avec la plate-forme 102, cette balise pouvant aussi remplir le rôle de transpondeur. Avantageusement, la balise multifonctions peut également comprendre des moyens pour réaliser des mesures d'altitude, ladite balise remplissant la fonction de radio altimètre et transmettant cycliquement l'altitude mesurée à la plate-forme 102 via des émissions vers les senseurs 201, 202. Cette fonctionnalité permet, par combinaison avec les mesures effectuées à partir des senseurs, d'obtenir une redondance d'information pour la valeur d'altitude de l'aéronef 100. Elle permet également d'obtenir une valeur d'altitude lorsque l'aéronef est au-dessus de la plate-forme 102.

Selon un mode de réalisation du système selon l'invention, plusieurs balises émettrices sont installées sur l'aéronef 100. La mesure de distance entre ces balises permet notamment de déterminer et de transmettre à la plate-forme 102 le cap de l'aéronef 100 en relatif par rapport au cap de la plate-forme 102 et le roulis de l'aéronef 100. En effet, connaissant la distance entre la plate-forme 102 et une première balise embarquée, la distance entre la plate-forme 102 et une deuxième balise embarquée, et l'écartement entre ces deux balises, on peut en déduire le cap de l'aéronef. En outre, en affectant une fréquence d'émission différente pour chaque balise, on peut lutter efficacement contre les échos multiples, notamment en azimut. Par ailleurs, l'emploi de plusieurs balises renforce la fiabilité du système par effet de redondance.

Un autre avantage de la présence d'une ou de plusieurs balises émettrices dans l'aéronef est qu'il est alors possible d'assimiler l'aéronef à une cible ponctuelle, en évitant les fluctuations des points brillants de l'aéronef 100 en fonction de sa présentation vis à vis des senseurs 201, 202.

Selon un mode de réalisation du système selon l'invention, la balise multifonctions embarquée dans l'aéronef comprend un ou plusieurs accéléromètres permettant de contrôler son assiette.

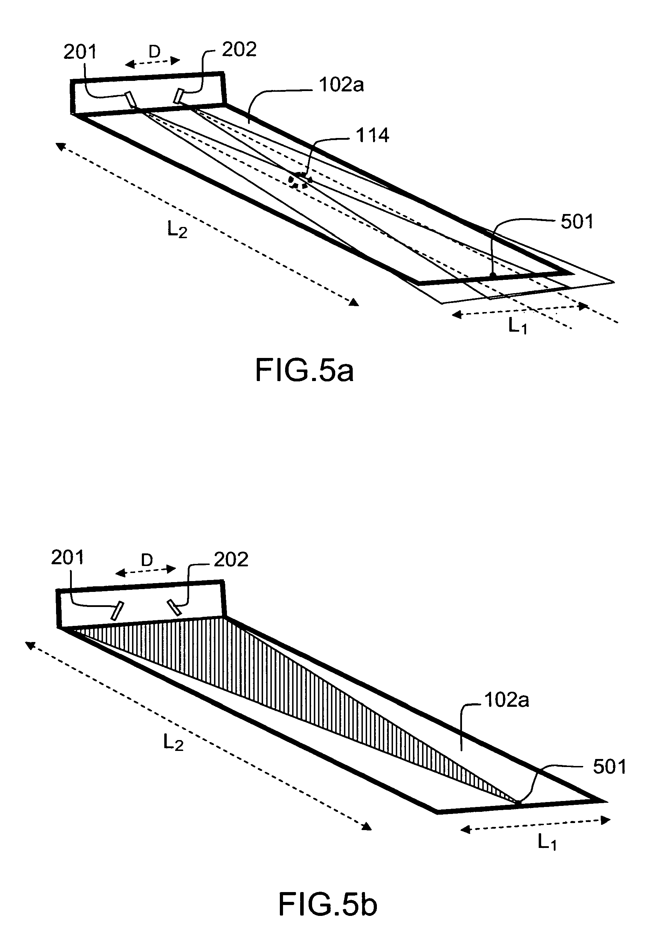

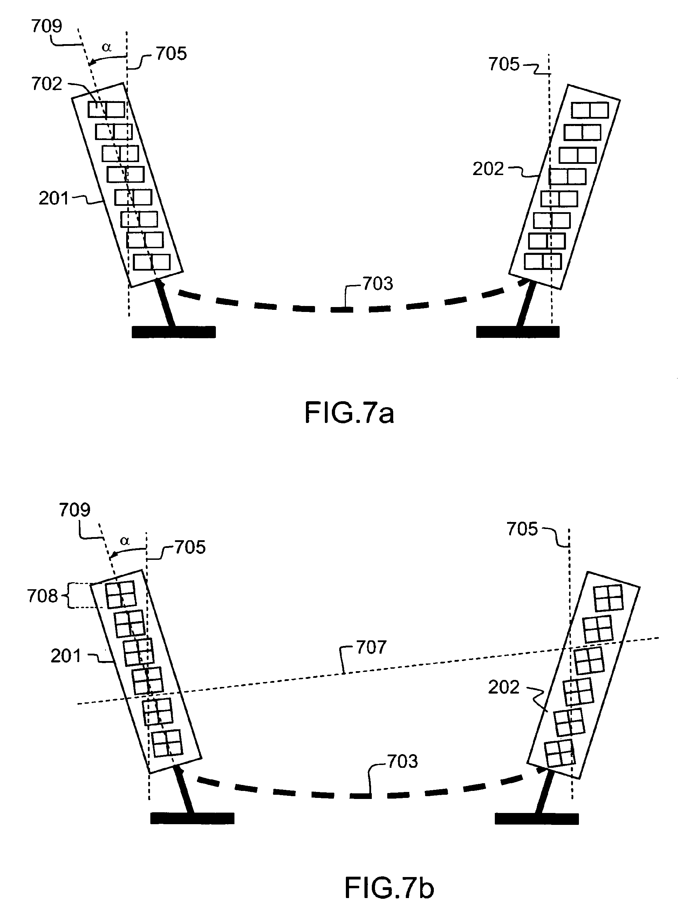

La figure 5a illustre un exemple de mise en oeuvre du système selon l'invention sur un spot ou une piste d'appontage. Dans l'exemple, les senseurs 201, 202 sont des panneaux antennaires tels que détaillés dans les figures 7a et 7b. La surface d'appontage 102a est, par exemple une piste de largeur L1 égale à 20m et de longueur L2 égale à 50m. Ces panneaux 201, 202 sont, par exemple, placés à l'extrémité de la surface d'appontage 102a et dans un plan sensiblement orthogonal à cette surface 102a, de manière à rayonner vers icelle 102a. Une balise de référence 501 est placée, par exemple, à l'autre extrémité de la surface d'appontage 102a. Cette balise de référence 501 permet d'indiquer une direction constante aux senseurs 201, 202, d'étalonner et de calibrer lesdits senseurs 201, 202, et d'éviter les dérives thermiques en ré étalonnant les senseurs avec l'évolution des conditions d'ensoleillement et/ou de températures. La balise de référence 501 émet un signal en direction des senseurs 201, 202, comme illustré en figure 5b, laquelle figure représente en hachuré la couverture du faisceau émis par la balise de référence 501. Le signal émis par la balise de référence 501 est d'une fréquence différente que celui du signal émis par l'émetteur, par exemple la balise multifonctions 100a, embarqué par l'aéronef 100. Selon un autre mode de réalisation dans lequel les senseurs 201, 202 sont des capteurs optiques, la balise de référence 501 est une diode ou un laser utilisé pour la calibration desdits capteurs 201, 202, une telle balise 501 permettant de recaler le système en relatif par rapport à la surface d'appontage 102a et de donner une référence (un « zéro » commun) aux senseurs 201, 202.

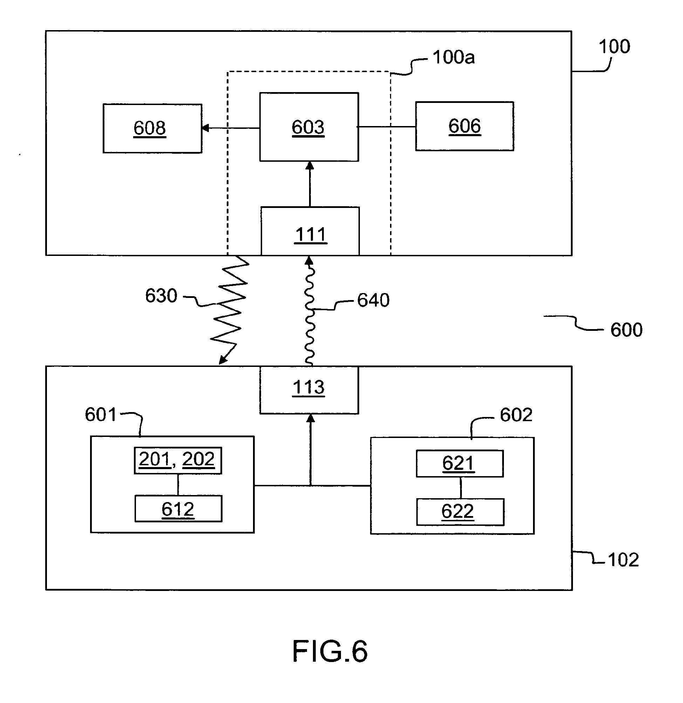

La figure 6 présente un exemple d'architecture du système selon l'invention. Le système 600 comprend notamment des moyens de localisation 601 de l'aéronef 100, des moyens de prédiction 602 des mouvements de la plate-forme 102 et des moyens 603 de détermination des commandes de vol à exécuter par l'aéronef 100 pour effectuer l'appontage.

Les moyens 601 de localisation de l'aéronef 100 permettent, à partir des mesures effectuées par les senseurs 201, 202, de calculer les coordonnées de la position de l'aéronef 100, par exemple avec la méthode présentée en figure 2. Selon le mode de réalisation présenté, ces moyens de localisation 601 comprennent les senseurs 201, 202 et des moyens de traitement 612 aptes à transformer les coordonnées de la position de l'aéronef 100 obtenues à partir des mesures des senseurs 201, 202 pour les exprimer dans un référentiel correspondant à une plate-forme 102 immobile, ce qui par exemple, pour un navire correspond à référentiel en « mer plate ».

Les moyens de prédiction 602 comprennent, par exemple, une centrale inertielle 621 mesurant les mouvements de la plate-forme 102. Cette centrale inertielle 621 peut être spécifiquement dédiée au système selon l'invention ou bien être la centrale inertielle propre à la plate-forme 102, par exemple celle du navire, dans le cas où la plate-forme 102 est un navire. Les moyens de prédiction 602 comprennent également des moyens de traitement 622 aptes à extrapoler les mouvements de la plate-forme 102, de manière à anticiper les manoeuvres à effectuer par l'aéronef 100 aux fins de réussir l'appontage, comme illustré en figure 1 a.

Les moyens 603 de détermination des commandes de vol, à partir des coordonnées « mer plate » de l'aéronef 100 et des mesures de prédiction des mouvements de la plate-forme 102, déterminent les manoeuvres à exécuter par l'aéronef 100 pour se placer en position d'appontage, autrement dit, formulent des commandes pour amener l'aéronef 100 à suivre la trajectoire d'appontage prévue, ces commandes étant transmises aux moyens de guidage 608 de l'aéronef 100. Les mesures dans le référentiel mer plate permettent d'avoir un pistage de l'aéronef 100 propre à ses mouvements réels et non pas avec les mouvements conjugués de la plate-forme 102 et de l'aéronef 100. Ceci permet de faire des comparaisons des positions et vitesses dans le même référentiel. Même si l'appontage se fait en mode relatif, par annulation de la vitesse relative de l'aéronef 100 et de la plate-forme 102, pour des raisons de simplification et pour ne pas modifier le pilote automatique de l'aéronef 100, il est plus facile de corriger la position absolue connue par l'aéronef 100 et ramener cette position en coordonnées « mer plate ».

Selon le mode de réalisation présenté en figure 6, les moyens 603 de détermination des commandes de vol sont intégrés à l'aéronef 100, par exemple dans une balise multifonctions 100a. Les mesures de navigation de l'aéronef 100 comme la vitesse et l'attitude sont par exemple fournies par une centrale inertielle 606 embarquée et/ou un terminal GPS présent dans l'aéronef 100. D'autres sources de mesures telles qu'un baro-altimètre, un compas magnétique ou des accéléromètres peuvent alimenter les moyens 603 de détermination des commandes de vol afin de redonder les informations manipulées par lesdits moyens 603 et ainsi procéder à des vérifications d'intégrité des mesures provenant des autres sources. Les mesures de position issues des moyens de localisation 601 de l'aéronef 100 et les mesures de prédiction des mouvements de la plate-forme 102 peuvent être transmises à l'aéronef 100 via une liaison radioélectrique 640. L'aéronef comprend des moyens de radiocommunications 111, lesquels peuvent être compris dans une balise multifonctions 100a pourvue de moyens de réceptions si l'aéronef 100 embarque une telle balise ou bien constituer une liaison de radiocommunications externe. Dans l'exemple de la figure 6, une balise multifonctions 100a comporte des moyens de réceptions 111 et émet également les signaux 630 reçus par les senseurs 201, 202 et permettant aux moyens 601 de localisation de déterminer la position de l'aéronef 100.

La plate-forme 102 comprend un émetteur 113 de faible puissance permettant de communiquer avec l'aéronef en émettant les données déterminées par les moyens 601 de localisation de l'aéronef 100 et les moyens 602 de prédiction des mouvements de la plate-forme 102.

Selon un autre mode de réalisation, les moyens de traitements 603 sont installés sur la plate-forme 102. L'émetteur de faible puissance 113 présent sur la plate-forme 102 transmet alors à l'aéronef 100 les commandes de vol calculées sur la plate-forme 102 tandis que les mesures de navigation de l'aéronef - par exemple, la vitesse, l'attitude - sont transmises à la plate-forme 102 via la balise multifonctions 100a ou une liaison de radiocommunications externe.

Le système selon l'invention n'altère pas la discrétion de la plate-forme 102, car contrairement à des radars nécessitant une forte puissance d'émission pour recueillir un écho exploitable, les puissances utilisées dans le cadre de l'invention sont celles utilisées pour des radiocommunications à courte et moyenne distance. En outre, la puissance de l'émission vers l'aéronef peut être ajustée en fonction de la distance séparant la plate-forme 102 de l'aéronef 100, c'est-à-dire diminuée à mesure que l'aéronef 100 se rapproche de son point d'appontage 114. Par ailleurs, il est possible pour cette liaison de radiocommunications de choisir une gamme de fréquences non perturbatrice pour l'environnement électromagnétique.

L'architecture de la figure 6 présente de plus l'avantage d'une certaine souplesse puisque les mesures issues des senseurs peuvent être remplacées par d'autres types de mesures, par exemple des mesures GPS. Afin d'avoir à éviter de procéder à de coûteuses modifications sur l'aéronef 100, les mesures issues des moyens de localisation 601 sont, de préférence, transmises au même format que les données GPS classiquement transmises à l'aéronef 100. En effet, les aéronefs étant généralement prévus pour fonctionner en mode absolu, avec des GPS, la transmission des données au même format évite de re-certifier les moyens de guidage 608 de l'aéronef-le pilote automatique - en mode relatif, dans l'hypothèse où ce mode ne serait pas déjà implémenté.

La figure 7a présente un premier exemple de configuration des senseurs permettant de traiter le problème des réflexions de signaux sur des parois latérales à la surface d'appontage.

Pour éviter les problèmes liés aux réflexions de signaux sur la surface d'appontage 102a, les senseurs 201, 202 sont, par exemple, des panneaux comprenant des paires de blocs 702 de récepteurs antennaires alignés tels que les panneaux proposées dans la demande de brevet international référencée sous le numéro WO2008/113750. Les panneaux peuvent être reliés par un câble 703. Chaque bloc 702 de récepteurs comprend par exemple quatre antennes 706 réceptrices planes. Chaque senseur 201, 202 peut être fixé de manière à ce que l'alignement des paires d'antennes soit confondu avec un axe vertical 705. Ainsi, on peut effectuer un échantillonnage spatial sur l'axe élévation de l'amplitude du signal d'interférence, lequel est constitué par la somme du signal reçu directement par le senseur 201, 202 et du signal réfléchi sur la surface d'appontage 102a puis reçu par le senseur 201, 202. Si le signal émis par l'aéronef est un signal de type CW, alors il suffit que les paires de blocs 702 soient suffisamment resserrées dans l'axe vertical 705 pour respecter la condition de Shannon et reconstituer un signal d'interférence sous la forme d'une sinusoïde.

Toutefois, en présence de parois latérales à proximité de la surface d'appontage 102a, les senseurs 201, 202 sont avantageusement penchés de sorte que les paires de blocs 702 d'antennes soient disposées le long d'un axe 709 formant un angle α compris, par exemple, entre 20° et 70° avec l'axe vertical 705. De préférence, les blocs 702 sont orientés selon la même direction pour les deux senseurs 201, 202. Dans l'exemple de la figure 7a, les blocs 702 sont placés selon un axe 707 formant un angle β avec l'axe 709 d'orientation du panneau. Les inclinaisons des senseurs peuvent être inégales et dans le même sens ou le sens opposé (par exemple, -45° pour un senseur et 45° pour l'autre). Le fait d'incliner chaque senseur 201, 202 autour d'un axe horizontal et orthogonal au plan dudit senseur permet d'effectuer également un échantillonnage spatial sur l'axe azimut de l'amplitude du signal d'interférence, lequel est constitué par la somme du signal reçu directement par le senseur 201, 202 et du signal réfléchi sur la ou les cloisons latérales puis reçu par le senseur 201, 202.

Ainsi, en effectuant l'échantillonnage spatial en deux dimensions pour chaque senseur 201, 202, on peut identifier l'endroit sur chaque senseur 201, 202 correspondant au signal d'interférence d'amplitude maximale et ré-appliquer les formules démontrées dans la demande de brevet internationale WO2007/131923. Les amplitudes mesurées sur les antennes sont un produit d'une fonction sinus décrite dans cette demande de brevet. Le positionnement incliné des senseurs, et l'échantillonnage spatial en deux dimensions du signal d'interférence permet, en utilisant un minimum d'antennes, de s'affranchir des trajets multiples à la fois en élévation et en azimut.

La figure 7b présente un deuxième exemple de configuration des senseurs permettant de traiter le problème des réflexions de signaux sur des parois latérales à la surface d'appontage. Selon ce mode de réalisation, les blocs 702 d'antennes sont rassemblées par groupes 708 de quatre blocs, chaque groupe 708 comprenant deux paires de blocs 702 alignées verticalement, les groupes 708 étant disposés le long de l'axe formé par l'angle α d'inclinaison du panneau du senseur 201, 202.

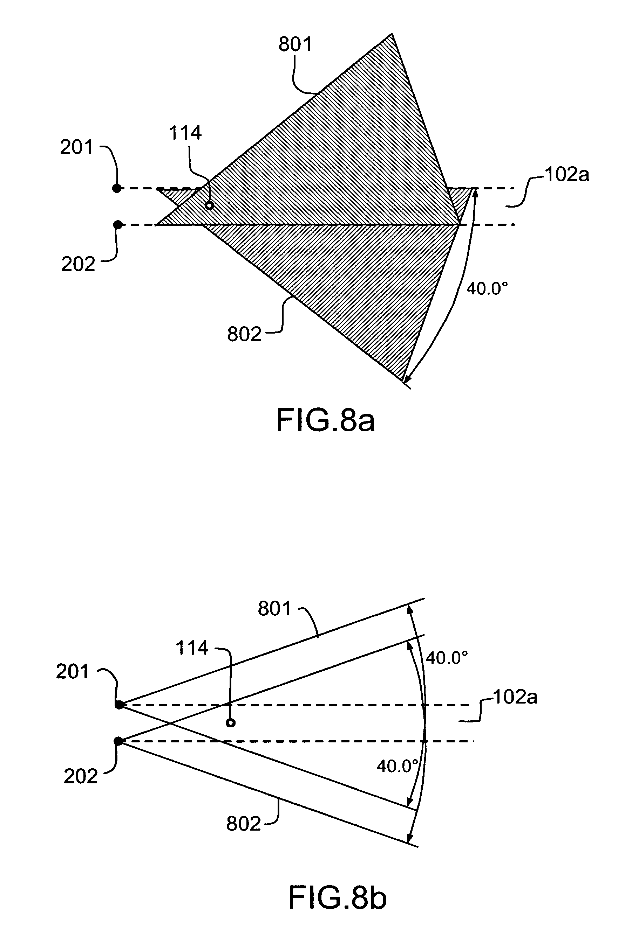

La figure 8a présente un exemple de positionnement des senseurs favorisant une large couverture de l'espace. Selon le mode de réalisation de la figure 8a, les faisceaux d'éclairement 801, 802 des deux senseurs 201, 202 sont croisés dans l'axe azimut, ce qui permet d'obtenir une large couverture d'éclairement en azimut tout en maintenant le point d'appontage 114 ou la grille d'appontage sur laquelle l'aéronef va se harponner - c'est-à-dire l'endroit où l'on souhaite que l'aéronef se pose sur la surface d'appontage 102a - aux forts dépointages des senseurs 201, 202. Par exemple, les senseurs 201, 202 peuvent être tournés autour d'un axe vertical de manière à ce que le lobe principal gauche du faisceau issu du senseur droit 201 et le lobe principal droit du faisceau issu du senseur gauche 202 éclaire de manière maximale le point d'appontage 114. Dans l'exemple, les angles d'éclairement de chacun des faisceaux sont, à titre d'exemple, égaux à 40°.

La figure 8b présente un exemple de positionnement des senseurs permettant de maximiser la distance mesurable à l'aéronef. Selon le mode de réalisation de la figure 8b, les faisceaux d'éclairement 801, 802 des deux senseurs 201, 202 sont sensiblement parallèles dans l'axe azimut. Ce positionnement permet une détection de l'aéronef à plus grande distance qu'avec le positionnement de la figure 8a.

Selon un mode de réalisation du système selon l'invention, un oscillateur local est partagé entre les senseurs 201, 202 aux fins de constituer un interféromètre. Cette utilisation permet d'augmenter la précision de la détermination de la position de l'aéronef par une base ambiguë mais précise. L'interféromètre ainsi constitué permet de mesurer la distance par mesure de la différence du temps d'arrivée des signaux sur chacun des senseurs 201, 202. Pour un signal émis par l'aéronef en bande X, cette différence de temps d'arrivée permet d'atteindre des précisions angulaires dix fois meilleures que celles obtenues en goniométrie d'amplitude.

De plus, il est possible de redonder les mesures en prenant en compte successivement, pour chaque antenne 706 d'un senseur 201, 202, seulement certains éléments rayonnants de cette antenne, par exemple trois éléments sur quatre disponibles, puis de contrôler les mesures obtenues pour chaque triplet.

Lorsque les senseurs 201, 202 ne sont pas parallèles - par exemple, s'ils sont inclinés dans des sens opposés -, alors la dimension de la base interférométrique en Azimut varie en fonction de l'élévation. On peut ainsi corréler les signaux reçus à partir de ces différentes bases interférométriques et supprimer les signaux erronés issus de trajets multiples provenant de réflexions latérales. Les valeurs angulaires ainsi récoltées vont permettre d'affiner la mesure et d'augmenter la précision. Un étalonnage de la base d'interférométrie, notamment grâce à la balise de référence 501 (figure 5a) permet une mesure de positionnement en relatif par rapport à la plate-forme 102.

Bien que l'invention vise principalement l'appontage des aéronefs, elle peut également s'appliquer à d'autres phases de vols et notamment aux phases de décollage. Par ailleurs, le système peut également être utilisé en cas d'atterrissage, notamment lorsque la piste d'atterrissage est pourvue d'une ou de plusieurs parois latérales, ces dernières provoquant des trajets multiples d'ondes dans l'axe azimut.

Les avantages procurés par l'invention sont multiples. L'utilisation du procédé selon l'invention permet de conserver une discrétion électromagnétique à bord de la plate-forme d'appontage.

Le procédé selon l'invention peut être mis en oeuvre avec un impact minimal sur l'architecture fonctionnelle de l'aéronef, grâce au faible temps de latence obtenu, c'est-à-dire le temps écoulé depuis l'émission d'un signal à partir de l'émetteur 100a embarqué sur l'aéronef jusqu'à la transmission à l'aéronef des commandes de vol calculées à partir des mesures de ce signal. Ce temps de latence est inférieur à 100ms. Le taux de rafraîchissement des mesures (ou fréquence de répétition) permet de minimiser les erreurs de calcul de vitesse et de filtrer les informations en tenant compte des mouvements de la plate-forme d'appontage.

La mise en oeuvre du procédé selon l'invention permet notamment d'optimiser le volume et le poids de l'électronique embarquée et de minimiser les contraintes d'installation en termes de discrétion électromagnétique sur la plate-forme d'appontage, de nombre d'antennes sur l'aéronef et sur la plate-forme d'appontage, de nombre d'interfaces, de synchronisation des signaux, de gestion des fréquences, d'intégrité des informations reçues.

Par ailleurs, grâce à son architecture souple, le système selon l'invention est portable et peut être aisément certifié. En effet, les éléments critiques dudit système ne sont pas intimement liés à l'aéronef et la liaison de données connectant la plate-forme à l'aéronef n'est pas soumise à de fortes exigences de sécurité de fonctionnement, ces exigences impliquant généralement des contraintes de codage numérique relativement lourdes à mettre en oeuvre et pouvant pénaliser les performances.

En outre, le système selon l'invention est adapté à une utilisation soumise aux aléas climatiques ; notamment, les senseurs utilisés peuvent fonctionner même en cas d'intempéries.

De plus, la mise en oeuvre du système est simple, intègre, et rapide.

Enfin, le système selon l'invention consomme peu d'énergie, les balises embarquées sur l'aéronef ayant des puissances d'émission très faibles, de l'ordre de quelques milliwatts.

**Revendications**

1. Système d'aide à l'appontage d'un aéronef (100) sur une plate-forme mobile (102) comportant une surface d'appontage (1 02a), ledit aéronef comprenant un émetteur de signaux (100a), ladite surface d'appontage (102a) de la plate-forme (102) réfléchissant les ondes électromagnétiques, le système comprenant des moyens (603) de détermination des commandes de vol à exécuter par l'aéronef, lesdits moyens étant au moins alimentés par des moyens (601) de localisation de l'aéronef et par des moyens (602) de prédiction des mouvements de la plate-forme, les moyens de localisation comprenant au moins deux senseurs passifs (201, 202) espacés, fixés à proximité de la surface d'appontage (102a) et aptes à recevoir les signaux émis par l'aéronef, le système étant **caractérisé en ce que** chaque senseur (201, 202) est un panneau sur lequel plusieurs récepteurs antennaires (706) sont répartis dans les deux dimensions dudit panneau, **en ce que** chaque panneau est fixé dans un plan sensiblement orthogonal à la surface d'appontage (102a) et **en ce que** chaque panneau (201, 202) est incliné autour d'un axe sensiblement orthogonal à la surface d'appontage (102a), les faisceaux d'éclairement (801, 802) desdits panneaux se croisant en azimut au-dessus de la surface d'appontage (102a).

2. Système selon la revendication précédente, **caractérisé en ce que** les récepteurs antennaires du panneau sont des antennes planes (706) rassemblées par blocs (702), les blocs étant orientés, dans le plan du panneau, de manière identique pour tous les senseurs (201, 202), les blocs (702) étant répartis dans la longueur du panneau.

3. Système selon l'une quelconque des revendications précédentes, la plate-forme mobile (102) comprenant une ou plusieurs parois latérales réfléchissant les ondes électromagnétiques, le système étant **caractérisé en ce que** chaque panneau (201, 202) de la plate-forme (102) est incliné autour d'un axe sensiblement orthogonal au plan dudit panneau, selon un angle α formé avec la verticale compris entre 20° et 70°.

4. Système selon l'une quelconque des revendications précédentes, **caractérisé en ce qu'**il comprend un oscillateur local relié aux senseurs (201, 202) pour réaliser un radio-interféromètre applicable aux signaux émis par l'aéronef.

5. Système selon la revendication 1, **caractérisé en ce que** chaque senseur (201, 202) est une caméra optique.

6. Système selon l'une quelconque des revendications précédentes, **caractérisé en ce qu'**il comprend une balise de référence (501) solidaire de la plate-forme (102) orientée pour émettre des signaux en direction des senseurs (201, 202).

7. Système selon l'une quelconque des revendications précédentes, **caractérisé en ce que** l'aéronef (100) est sans pilote, l'aéronef étant apte à être guidé automatiquement à distance.

8. Procédé d'aide à l'appontage d'un aéronef (100) sur une plate-forme mobile (102) comportant une surface d'appontage (102a), ladite surface d'appontage (102a) réfléchissant les ondes électromagnétiques, chaque senseur (201, 202) étant un panneau sur lequel plusieurs récepteurs antennaires (706) sont répartis dans les deux dimensions dudit panneau et chaque panneau est incliné autour d'un axe sensiblement orthogonal au plan dudit panneau, le procédé étant **caractérisé en ce qu'**il comprend au moins les étapes suivantes :

émettre, à partir de l'aéronef, des signaux ; recevoir, sur au moins deux senseurs passifs (201, 202) solidaires de la plate-forme (102), les signaux émis par l'aéronef et déterminer la position de l'aéronef à partir de ces signaux reçus ; exprimer les coordonnées de la position de l'aéronef dans un référentiel correspondant à une plate-forme immobile ; prédire les mouvements de la plate-forme (102) ; formuler des commandes de vol pour orienter l'aéronef sur sa trajectoire d'appontage en utilisant les coordonnées de l'aéronef exprimées précédemment et les prédictions de mouvements de la plate-forme ; éliminer des trajets multiples en élévation et en azimut en effectuant un échantillonnage spatial de l'amplitude du signal d'interférence reçu par au moins un senseur dans l'axe élévation et en effectuant un échantillonnage spatial de l'amplitude du signal d'interférence reçu par au moins un senseur dans l'axe azimut.

9. Procédé selon la revendication précédente, **caractérisé en ce que** chaque panneau est incliné autour d'un axe sensiblement orthogonal au plan dudit panneau selon un angle α formé avec la verticale compris entre 20° et 70°.

10. Procédé selon l'une des revendications 8 ou 9, la plate-forme transmettant des données par voie radioélectrique à l'aéronef (100) grâce à un émetteur (113), **caractérisé en ce que** le niveau de puissance d'émission par ledit émetteur est ajusté en fonction de la distance mesurée entre ladite plate-forme et l'aéronef (100), la puissance d'émission étant diminuée lorsque l'aéronef se rapproche de la plate-forme.

11. Procédé selon l'une des revendications 8 à 10, **caractérisé en ce que**, pour chaque senseur (201, 202), on détermine la position de l'aéronef (100) à partir des signaux reçus sur ledit senseur, puis l'on détermine la position de l'aéronef par triangulation à partir des mesures issues d'au moins deux senseurs, et que l'on combine ces positions déterminées indépendamment pour fiabiliser la localisation dudit aéronef.

12. Procédé selon l'une des revendications 8 à 11, **caractérisé en ce que** le signal émis depuis l'aéronef (100) et reçu par les senseurs (201, 202) de la plate-forme (102) est un signal mono-fréquence émis en bande X ou un signal comportant un peigne de raies en fréquences.

**13.** Procédé selon l'une des revendications 8 à 12, **caractérisé en ce que** l'étape de formulation des commandes de vol pour orienter l'aéronef sur sa trajectoire d'appontage prend en compte également des données de navigation issues directement des instruments de l'aéronef.

**Patentansprüche**

**1.** System zum Assistieren eines Luftfahrzeugs (100) beim Landen an Deck einer sich bewegenden Plattform (102), die eine Decklandefläche (102a) umfasst, wobei das Luftfahrzeug einen Signalemitter (100a) aufweist, wobei die Decklandefläche (102a) der Plattform (102) die elektromagnetischen Wellen reflektiert, wobei das System Mittel (603) zum Ermitteln von von dem Luftfahrzeug auszuführenden Flugbefehlen umfasst, wobei die Mittel zumindest von Mitteln (601) zum Orten des Luftfahrzeug s und von Mitteln (602) zum Vorhersagen von Bewegungen der Plattform gespeist werden, wobei das Ortungsmittel wenigstens zwei voneinander beabstandete passive Sensoren (201, 202) umfasst, die in der Nähe der Decklandefläche (102a) befestigt und zum Empfangen der von dem Luftfahrzeug emittierten Signale ausgelegt sind, wobei das System **dadurch gekennzeichnet ist, dass** jeder Sensor (201, 202) eine Platte ist, auf der mehrere Antennenempfänger (706) in den zwei Dimensionen der Platte verteilt sind, dadurch, dass jede Platte in einer Ebene im Wesentlichen orthogonal zur Decklandefläche (102a) befestigt ist, und dadurch, dass jede Platte (201, 202) um eine Achse im Wesentlichen orthogonal zur Decklandefläche (102a) geneigt ist, wobei die Beleuchtungsstrahlen (801, 802) der Platten sich im Azimut über der Decklandefläche (102a) kreuzen.

**2.** System nach dem vorherigen Anspruch, **dadurch gekennzeichnet, dass** die Antennenempfänger der Platte blockweise (702) gruppierte flache Antennen (706) sind, wobei die Blöcke in der Ebene der Platte für alle Sensoren (201, 202) identisch orientiert sind, wobei die Blöcke (702) über die Länge der Platte verteilt sind.

**3.** System nach einem der vorherigen Ansprüche, wobei die bewegliche Plattform (102) eine oder mehrere Seitenwände umfasst, die die elektromagnetischen Wellen reflektieren, wobei das System **dadurch gekennzeichnet ist, dass** jede Platte (201, 202) der Plattform (102) um eine Achse im Wesentlichen orthogonal zur Ebene der Platte in einem Winkel α zwischen 20° und 70° zur Vertikalen geneigt ist.

**4.** System nach einem der vorherigen Ansprüche, **dadurch gekennzeichnet, dass** es einen mit den Sensoren (201, 202) verbundenen Lokaloszillator zum Realisieren eines auf die vom Luftfahrzeug emittierten Signale anwendbaren Radiointerferometers umfasst.

**5.** System nach Anspruch 1, **dadurch gekennzeichnet, dass** jeder Sensor (201, 202) eine optische Kamera ist.

**6.** System nach einem der vorherigen Ansprüche, **dadurch gekennzeichnet, dass** es eine Referenzbake (501) integral mit der Plattform (102) umfasst, die zum Emittieren von Signalen in Richtung der Sensoren (201, 202) orientiert ist.

**7.** System nach einem der vorherigen Ansprüche, **dadurch gekennzeichnet, dass** das Luftfahrzeug (100) unbesetzt ist, wobei das Luftfahrzeug so ausgelegt ist, dass es automatisch ferngesteuert werden kann.

**8.** Verfahren zum Assistieren beim Landen eines Luftfahrzeug s (100) an Deck einer sich bewegenden Plattform (102), die eine Decklandefläche (102a) umfasst, wobei die Decklandefläche (102a) die elektromagnetischen Wellen reflektiert, wobei jeder Sensor (201, 202) eine Platte ist, auf der mehrere Antennenempfänger (706) in den beiden Dimensionen der Platte verteilt sind und jede Platte um eine Achse im Wesentlichen orthogonal zur Ebene der Platte geneigt ist, wobei das Verfahren **dadurch gekennzeichnet ist, dass** es wenigstens die folgenden Schritte beinhaltet:

Emittieren von Signalen von dem Luftfahrzeug ;
Empfangen, auf wenigstens zwei passiven Sensoren (201, 202) einstückig mit der Plattform (102), der von dem Luftfahrzeug emittierten Signale und Ermitteln der Position des Luftfahrzeug s auf der Basis der empfangenen Signale;
Ausdrücken der Koordinaten der Position des Luftfahrzeugs in einem Referenzsystem, das einer stationären Plattform entspricht;
Vorhersagen der Bewegungen der Plattform (102);
Formulieren von Flugbefehlen zum Orientieren des Luftfahrzeugs auf seiner Decklandeflugbahn anhand der zuvor ausgedrückten Koordinaten des Luftfahrzeug s und der Vorhersagen von Bewegungen der Plattform;
Eliminieren von mehreren Flugbahnen nach Elevation und nach Azimut durch Ausführen einer räumlichen Abtastung der Amplitude des von wenigstens einem Sensor empfangenen Interferenzsignals in der Elevationsachse und durch Durchführen von räumlicher Abtastung der Amplitude des von wenigstens einem Sensor in der Azimutachse empfangenen Inteiferenzsignals.

**9.** Verfahren nach dem vorherigen Anspruch, **dadurch gekennzeichnet, dass** jede Platte um eine Achse im Wesentlichen orthogonal zur Ebene der Platte entlang einem Winkel α zwischen 20° und 70° zur Vertikalen geneigt ist.

**10.** Verfahren nach Anspruch 8 oder 9, wobei die Plattform Daten über einen radioelektrischen Kanal zu dem Luftfahrzeug (100) mit einem Sender (113) sendet, **dadurch gekennzeichnet, dass** der Emissionsleistungspegel des Emitters in Abhängigkeit von dem zwischen der Plattform und dem Luftfahrzeug (100) gemessenen Abstand justiert wird, wobei die Emissionsleistung reduziert wird, wenn sich das Luftfahrzeug der Plattform nähert.

**11.** Verfahren nach einem der Ansprüche 8 bis 10, **dadurch gekennzeichnet, dass** für jeden Sensor (201, 202) die Position des Luftfahrzeugs (100) auf der Basis der auf dem Sensor empfangenen Signale bestimmt wird, dann die Position des Luftfahrzeugs durch Triangulation auf der Basis von von wenigstens zwei Sensoren kommenden Messungen ermittelt wird und diese unabhängig ermittelten Positionen kombiniert werden, um die Zuverlässigkeit der Ortung des Luftfahrzeugs zu verbessern.

**12.** Verfahren nach einem der Ansprüche 8 bis 11, **dadurch gekennzeichnet, dass** das von dem Luftfahrzeug (100) emittierte und von den Sensoren (201, 202) der Plattform (102) empfangene Signal ein Monofrequenzsignal ist, das im X-Band gesendet wird, oder ein Signal ist, das eine Reihe von Frequenzleitungen umfasst.

**13.** Verfahren nach einem der Ansprüche 8 bis 12, **dadurch gekennzeichnet, dass** der Schritt des Formulierens von Flugbefehlen zum Orientieren des Luftfahrzeugs auf seiner Decklandebahn auch direkt von den Instrumenten des Luftfahrzeugs kommende Navigationsdaten berücksichtigt.

**Claims**

**1.** A system for assisting in the deck landing of an aircraft (100) on a moving platform (102) comprising a deck landing surface (102a), said aircraft comprising a signal transmitter (100a), said deck landing surface (102a) of said platform (102) reflecting the electromagnetic waves, said system comprising means (603) for determining flight commands to be executed by said aircraft, said means being at least fed by means (601) for locating said aircraft and by means (602) for predicting movements of said platform, said localisation means comprising at least two passive sensors (201, 202), which are spaced apart and fixed in the vicinity of said deck landing surface (102a) and are designed to receive the signals transmitted by said aircraft, said system being **characterised in that** each sensor (201, 202) is a panel on which a plurality of antenna receivers (706) is distributed in the two dimensions of said panel, **in that** each panel is fixed in a plane substantially orthogonal to said deck landing surface (102a) and **in that** each panel (201, 202) is inclined about an axis substantially orthogonal to said deck landing surface (102a), the illumination beams (801, 802) of said panels crossing at the azimuth above said deck landing surface (102a).

**2.** The system according to the preceding claim, **characterised in that** said antenna receivers of said panel are flat antennae (706) grouped into blocks (702), said blocks being oriented, in the plane of the panel, in an identical manner for all of the sensors (201, 202), said blocks (702) being distributed along the length of said panel.

**3.** The system according to any one of the preceding claims, said moving platform (102) comprising one or more lateral walls reflecting the electromagnetic waves, said system being **characterised in that** each panel (201, 202) of said platform (102) is inclined about an axis substantially orthogonal to the plane of said panel along an angle α of between 20° and 70° formed with the vertical.

**4.** The system according to any one of the preceding claims, **characterised in that** it comprises a local oscillator connected to said sensors (201, 202) for producing a radio interferometer that can be applied to the signals transmitted by said aircraft.

**5.** The system according to claim 1, **characterised in that** each sensor (201, 202) is an optical camera.

**6.** The system according to any one of the preceding claims, **characterised in that** it comprises a reference beacon (501) integral with said platform (102), which is oriented to transmit signals toward said sensors (201, 202).

**7.** The system according to any one of the preceding claims, **characterised in that** said aircraft (100) is pilotless, said aircraft being designed to be guided automatically and remotely.

**8.** A method for assisting in the deck landing of an aircraft (100) on a moving platform (102) comprising a deck landing surface (102a), said deck landing surface (102a) reflecting the electromagnetic waves, each sensor (201, 202) being a panel on which a plurality of antenna receivers (706) is distributed in the two dimensions of said panel and each panel is inclined about an axis substantially orthogonal to the plane of said panel, said method being **characterised in that** it comprises at least the following steps:

transmitting signals from said aircraft;
receiving, on at least two passive sensors (201, 202) integral with said platform (102), the signals transmitted by said aircraft and determining the position of said aircraft on the basis of said received signals;
expressing the coordinates of the position of said aircraft in a reference system corresponding to a stationary platform;
predicting the movements of said platform (102);
formulating flight commands for orienting said aircraft on its deck landing trajectory by using the previously expressed coordinates of said aircraft and the predictions of movements of said platform;
eliminating multiple paths by elevation and by azimuth by carrying out spatial sampling of the amplitude of the interference signal received by at least one sensor in the elevation axis and by carrying out spatial sampling of the amplitude of the interference signal received by at least one sensor in the azimuth axis.

9. The method according to the preceding claim, **characterised in that** each panel is inclined about an axis substantially orthogonal to the plane of said panel along an angle $\alpha$ of between 20° and 70° formed with the vertical.

10. The method according to claim 8 or 9, said platform transmitting data via radioelectric channel to said aircraft (100) using a transmitter (113), **characterised in that** the transmission power level of said transmitter is adjusted as a function of the distance measured between said platform and said aircraft (100), with the transmission power being reduced when said aircraft approaches said platform.

11. The method according to any one of claims 8 to 10, **characterised in that**, for each sensor (201, 202), the position of said aircraft (100) is determined on the basis of signals received on said sensor, then the position of said aircraft is determined by triangulation on the basis of measurements coming from at least two sensors, and these independently determined positions are combined to enhance the reliability of the localisation of said aircraft.

12. The method according to any one of claims 8 to 11, **characterised in that** the signal transmitted from said aircraft (100) and received by said sensors (201, 202) of said platform (102) is a mono-frequency signal transmitted in the X band or a signal comprising a row of frequency lines.

13. The method according to any one of claims 8 to 12, **characterised in that** said step of formulating flight commands for orienting said aircraft on its deck landing trajectory also takes into account navigation data coming directly from the instruments of said aircraft.

FIG.1a

FIG.1b

FIG.2

FIG.3

**FIG.4a**

**FIG.4b**

**FIG.5a**

**FIG.5b**

FIG.6

FIG.7a

FIG.7b

FIG.8a

FIG.8b

EP 2 237 067 B1

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006053868 A
- WO 2007063126 A
- WO 2007131923 A
- WO 2008113750 A
- FR 2836554